# EUROPEAN PATENT APPLICATION

(11) **EP 4 819 337 A1**
(43) Date of publication of application: **07.10.2026**
(21) Application number: 24895934.8
(22) Date of filing: 23.09.2024
(51) Int. Cl.: H01M 50/296, H01M 50/584, H01M 50/593

(54) **POWER LEAD-OUT STRUCTURE FOR BATTERY PACK, BATTERY PACK AND VEHICLE**

(30) Priority: 01.12.2023 CN 202323299057 U
(71) Applicant: BYD Company Limited, Shenzhen, Guangdong 518118 (CN)
(72) Inventor: YOU, Kai, Shenzhen, Guangdong 518118 (CN); ZHANG, Meixia, Shenzhen, Guangdong 518118 (CN); ZHANG, Yanjun, Shenzhen, Guangdong 518118 (CN); SUN, Shiyan, Shenzhen, Guangdong 518118 (CN); GONG, Xubin, Shenzhen, Guangdong 518118 (CN)
(74) Representative: Mathys & Squire
(86) International application number: PCT/CN2024/120373
(87) International publication number: WO 2025/112836

(57) **Abstract**

A power lead-out structure for a battery pack, a battery pack, and a vehicle are provided. The power lead-out structure for a battery pack includes: a fixing platform, where the fixing platform is provided with an accommodating groove; and a lead-out busbar, where the lead-out busbar is accommodated in the accommodating groove, and the lead-out busbar includes a positive electrode lead-out busbar and a negative electrode lead-out busbar and is fixed to the fixing platform.

## Description

### CROSS-REFERENCE TO RELATED APPLICATIONS

This application claims priority to Chinese patent application No. 202323299057.X, filed on December 1, 2023, and entitled "POWER LEAD-OUT STRUCTURE FOR BATTERY PACK, BATTERY PACK, AND VEHICLE", which is incorporated herein by reference in its entirety.

### TECHNICAL FIELD

This application relates to the field of vehicles, and in particular, to a power lead-out structure for a battery pack, a battery pack, and a vehicle.

### BACKGROUND

In related art, conductive wires are usually disorderly in a battery pack, occupying excessive space in the battery pack and making it inconvenient to arrange a battery and other structures.

### SUMMARY

This application is intended to resolve at least one of technical problems existing in the related art. Therefore, an objective of this application is to provide a power lead-out structure for a battery pack. The power lead-out structure for a battery pack fixes a lead-out busbar on a fixing platform, thereby achieving tidy wiring in a housing, saving space in the housing, and facilitating arrangement of a battery and other structures. This application further provides a battery pack having the foregoing power lead-out structure.

This application further provides a vehicle having the foregoing battery pack.

The power lead-out structure for a battery pack according to this application includes: a fixing platform, the fixing platform being provided with an accommodating groove; and a lead-out busbar, the lead-out busbar being accommodated in the accommodating groove, and the lead-out busbar including a positive electrode lead-out busbar and a negative electrode lead-out busbar and being fixed to the fixing platform.

The power lead-out structure for a battery pack according to this application can fix the lead-out busbar on the fixing platform, thereby achieving tidy wiring in the housing, saving space in the housing, and facilitating the arrangement of the battery and other structures.

The battery pack according to this application includes: a plurality of batteries; a housing, the housing defining an accommodating cavity adapted to accommodate the plurality of batteries; and a power lead-out structure, the power lead-out structure being arranged in the housing and configured as the power lead-out structure for a battery pack according to any one of the foregoing embodiments.

Because the battery pack according to this application is provided with the power lead-out structure for a battery pack according to any one of the foregoing embodiments, the battery pack has higher space utilization and structural strength.

The vehicle according to this application includes the battery pack according to any one of the foregoing embodiments.

Because the vehicle according to this application is provided with the battery pack according to the foregoing embodiment, the vehicle is safer to use.

Additional aspects and advantages of this application are in part described in the following descriptions and in part become apparent in the following descriptions or are learned through practice of this application.

### DESCRIPTION OF DRAWINGS

FIG. 1 is a diagram of a structure of a battery pack in which a fixing platform is configured as a tray side beam according to some embodiments of this application;
FIG. 2 is an enlarged view of portion A circled in FIG. 1;
FIG. 3 is a diagram of a structure of a fixing platform provided with an accommodating groove according to an embodiment of this application;
FIG. 4 is a diagram of a structure of a fixing platform provided with a plurality of accommodating grooves according to an embodiment of this application;
FIG. 5 is a diagram of a partial structure of a lead-out busbar group according to an embodiment of this application;
FIG. 6 is a diagram of a partial structure of a lead-out busbar group according to an embodiment of this application; and
FIG. 7 is a diagram of a structure of a fixing platform according to some other embodiments of this application.

### Reference numerals:

1: battery pack;
11: fixing platform; 11a: accommodating groove; 110a: first accommodating groove; 111a: second accommodating groove; 11b: first snap-fit groove; 11c: second snap-fit groove; 110: first surface; 111: reinforcing structure;
12: lead-out busbar group; 121: lead-out busbar; 1211: extension section; 1212: first bent section; 1213: second bent section; 1214: buffer protrusion; 121a: first lead-out end; 121b: second lead-out end; 122: high-voltage connector; 123: first insulating layer;
13: insulating buffer; 14: insulating fixing plate; 141: first snap-fit pin; 142: second snap-fit pin; 15: high-temperature adhesive tape;
20: tray base plate; 20a: power distribution cavity; 20b: battery cavity;
30: tray side beam;
40: partition beam; 50: protective support; 50a: exhaust channel; 60: power distribution box.

### DETAILED DESCRIPTION OF EMBODIMENTS

Embodiments of this application are described in detail below, examples of which are shown in the accompanying drawings, where same or similar reference numerals throughout represent same or similar elements or elements having same or similar functions. The embodiments described below with reference to the accompanying drawings are exemplary and are merely used to explain this application, and will not be construed as a limitation on this application.

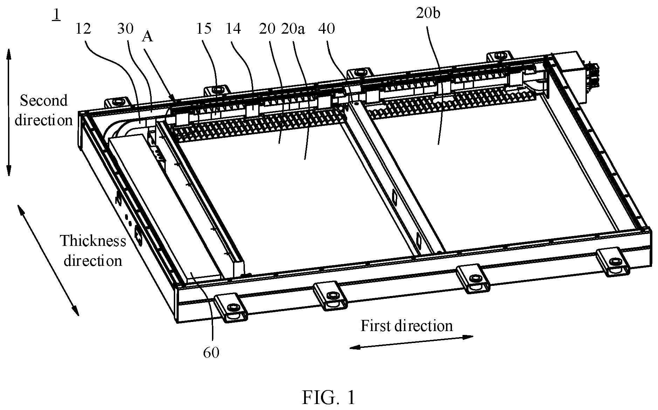

A power lead-out structure for a battery pack according to an embodiment of this application is described below with reference to FIG. 1 to FIG. 7.

As shown in FIG. 1 to FIG. 7, the power lead-out structure for a battery pack according to this application includes: a fixing platform 11 and a lead-out busbar 121. The fixing platform 11 is adapted to mount the lead-out busbar 121. Specifically, the fixing platform 11 is provided with an accommodating groove 11a, and the lead-out busbar 121 is accommodated in the accommodating groove 11a. In some embodiments, the lead-out busbar 121 includes a positive electrode lead-out busbar and a negative electrode lead-out busbar. The fixing platform 11 can be configured as at least a portion of a housing of the battery pack 1. The lead-out busbar 121 is mounted in the accommodating groove 11a on the fixing platform 11 to complete wiring in the housing. It will be understood that the positive electrode lead-out busbar and the negative electrode lead-out busbar can be accommodated in the same accommodating groove 11a or in different accommodating grooves 11a, which can be selected depending on actual needs, and is not limited herein.

The power lead-out structure for a battery pack according to this application can fix the lead-out busbar 121 on the fixing platform 11, thereby achieving tidy wiring in the housing, saving space in the housing, and facilitating arrangement of a battery and other structures.

The power lead-out structure for a battery pack according to this application can be used as an arrangement form of a long aluminum busbar rear-plug fast charging structure. In this case, one end of the positive electrode lead-out busbar and one end of the negative electrode lead-out busbar can be separately electrically connected to the power distribution box 60, and one end of the positive electrode lead-out busbar and the other end of the negative electrode lead-out busbar can be separately electrically connected to other structures except the battery pack 1. The power lead-out structure for a battery pack according to this application can alternatively be used for a parallel design of positive and negative electrodes of a short busbar. In this case, one end of the positive electrode lead-out busbar and one end of the negative electrode lead-out busbar can be respectively electrically connected to positive and negative electrodes of the battery, and one end of the positive electrode lead-out busbar and the other end of the negative electrode lead-out busbar can be separately electrically connected to other structures except the battery pack 1. The power lead-out structure for a battery pack according to this application can alternatively be configured to fix a busbar in the battery pack 1. In this case, one end of the positive electrode lead-out busbar and one end of the negative electrode lead-out busbar can be respectively electrically connected to positive and negative electrodes of the battery, and one end of the positive electrode lead-out busbar and the other end of the negative electrode lead-out busbar can be separately electrically connected to the power distribution box 60. Applications can be made according to actual needs, without limitation herein.

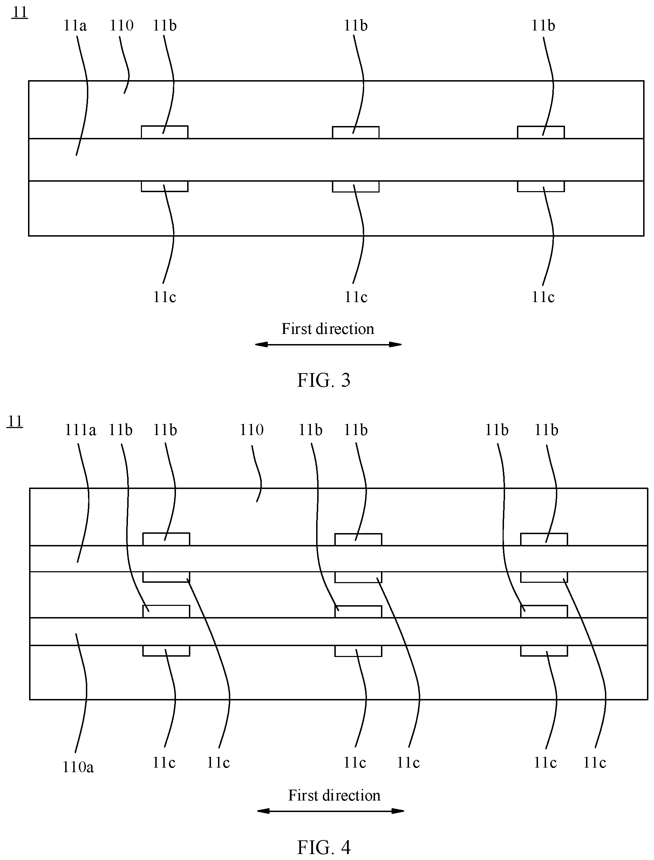

According to some embodiments of this application, as shown in FIG. 3, the positive electrode lead-out busbar and the negative electrode lead-out busbar are separately accommodated in the same accommodating groove 11a, and the positive electrode lead-out busbar and the negative electrode lead-out busbar are stacked in a thickness direction. Specifically, the positive electrode lead-out busbar and the negative electrode lead-out busbar are sequentially stacked in the thickness direction and accommodated in the same accommodating groove 11a, which can improve space utilization of the fixing platform 11. Less grooves are formed in the fixing platform 11, which facilitates arrangement of other structural features on the fixing platform 11. In addition, an area of the single accommodating groove 11a is small, which can ensure that the fixing platform 11 has sufficient structural strength. Here, when the positive electrode lead-out busbar and the negative electrode lead-out busbar are accommodated in the same accommodating groove 11a, insulation treatment is required for the positive electrode lead-out busbar and/or the negative electrode lead-out busbar to prevent short circuits.

According to some embodiments of this application, at least one positive electrode lead-out busbar is provided. At least one negative electrode lead-out busbar is provided. One or a plurality of positive electrode lead-out busbars and one or a plurality of negative electrode lead-out busbars are stacked in the thickness direction and accommodated in one accommodating groove 11a. The plurality of lead-out busbars 121 are stacked together, which facilitates integrated transportation and mounting of the plurality of lead-out busbars 121, and can improve strength and mounting efficiency of the lead-out busbars 121.

In some embodiments, the lead-out busbar 121 may be a copper busbar or an aluminum busbar.

In some embodiments, the fixing platform 11 may be an insulating member to prevent leakage of current from the lead-out busbar 121 to the housing. In some other embodiments, a material of the fixing platform 11 is not limited, and an insulating member can be arranged between the fixing platform 11 and the lead-out busbar 121 to prevent leakage of current from the lead-out busbar 121 to the housing.

According to some embodiments of this application, as shown in FIG. 4, a plurality of the accommodating grooves 11a are provided, forming at least one first accommodating groove 110a and at least one second accommodating groove 111a that are isolated from each other. The positive electrode lead-out busbar is accommodated in the first accommodating groove 110a, and the negative electrode lead-out busbar is accommodated in the second accommodating groove 111a. Specifically, the positive electrode lead-out busbar and the negative electrode lead-out busbar are respectively accommodated in different accommodating grooves, and the different accommodating grooves are spaced apart. For example, the plurality of accommodating grooves 11a can be arranged in parallel. The positive electrode lead-out busbar and the first accommodating groove 110a are in one-to-one correspondence. The negative electrode lead-out busbar and the second accommodating groove 111a are in one-to-one correspondence. The positive electrode lead-out busbar and the negative electrode lead-out busbar are respectively accommodated in the corresponding accommodating grooves 11a.

According to some embodiments of this application, each first accommodating groove 110a is provided with a plurality of positive electrode lead-out busbars stacked in the thickness direction, and each second accommodating groove 111a is provided with a plurality of negative electrode lead-out busbars stacked in the thickness direction, which facilitates integrated transportation and mounting of the plurality of positive electrode lead-out busbars and the plurality of negative electrode lead-out busbars, and can improve strength and mounting efficiency of the positive electrode lead-out busbars and the negative electrode lead-out busbars.

According to some embodiments of this application, the plurality of lead-out busbars 121 are stacked in the thickness direction. The plurality of lead-out busbars 121 located in the same accommodating groove 11a are configured as a lead-out busbar group 12. A side surface of the lead-out busbar 121 in the thickness direction is directly opposite to a bottom wall of the accommodating groove 11a. The lead-out busbar group 12 in each accommodating groove 11a is configured as a whole to simplify a wiring operation in the housing.

According to some embodiments of this application, as shown in FIG. 3 to FIG. 5, the accommodating groove 11a extends in a first direction. Each lead-out busbar 121 includes an extension section 1211 and a first lead-out end 121a. The extension section 1211 extends in the first direction, and a projection thereof in the thickness direction partially coincides with a projection of the accommodating groove 11a in the thickness direction. The first lead-out end 121a is located at one end of the extension section 1211 in the first direction and extends toward a direction away from the fixing platform 11. Specifically, both the accommodating groove 11a and the extension section 1211 extend in the first direction. The accommodating groove 11a can accommodate a portion of the extension section 1211 in the first direction. In this case, the projection of the extension section 1211 in the thickness direction partially coincides with the projection of the accommodating groove 11a in the thickness direction. In addition, among the plurality of lead-out busbars 121 of the lead-out busbar group 12, the extension sections 1211 of the plurality of lead-out busbars 121 may all be accommodated in the accommodating groove 11a. Alternatively, the extension sections 1211 of the lead-out busbars 121 close to the fixing platform 11 can be accommodated in the accommodating groove 11a. No limitations are made herein.

In some embodiments, the first lead-out end 121a may be connected to one end of the extension section 1211 in an extension direction. The extension section 1211 extends in the first direction, and the first lead-out end 121a extends in the direction away from the fixing platform 11 to electrically connect to the positive electrode or the negative electrode of the battery, or to electrically connect to the power distribution box 60.

According to some embodiments of this application, as shown in FIG. 3 to FIG. 5, the fixing platform 11 has a first surface 110, and an accommodating groove 11a is formed in the first surface 110. Each lead-out busbar 121 further includes a first bent section 1212. One end of the first bent section 1212 is connected to one end of the extension section 1211 in the first direction, and the other end of the first bent section 1212 is bent toward one of two sidewalls opposite to the accommodating groove 11a and is connected to the first lead-out end 121a. In some embodiments, the two sidewalls are opposite to each other in a second direction. The second direction is separately orthogonal to the first direction and the thickness direction of the lead-out busbar group 12. The other end of the first bent section 1212 is bent toward the second direction and connected to the first lead-out end 121a.

In some embodiments, the first bent section 1212 is connected to one end of the extension section 1211 in the extension direction and bent toward the second direction. The first lead-out end 121a may be connected to the first bent section 1212. The first lead-out end 121a extends in the direction away from the fixing platform 11, to electrically connect to the positive electrode or the negative electrode of the battery, or the power distribution box 60. In some embodiments, the first bent section 1212 and the extension section 1211 are arranged parallel to the first surface 110, and the first lead-out end 121a extends in the direction away from the first surface 110.

In some embodiments, a buffer protrusion 1214 is formed on a portion of the lead-out busbar 121 that is between the first bent section 1212 and the first lead-out end 121a. The buffer protrusion 1214 is adapted to provide buffering when the lead-out busbar 121 is subjected to a force in the thickness direction, to prevent the force from being transmitted to the positive electrode or the negative electrode of the battery or the power distribution box 60 electrically connected to the first lead-out end 121a, thereby ensuring safe use.

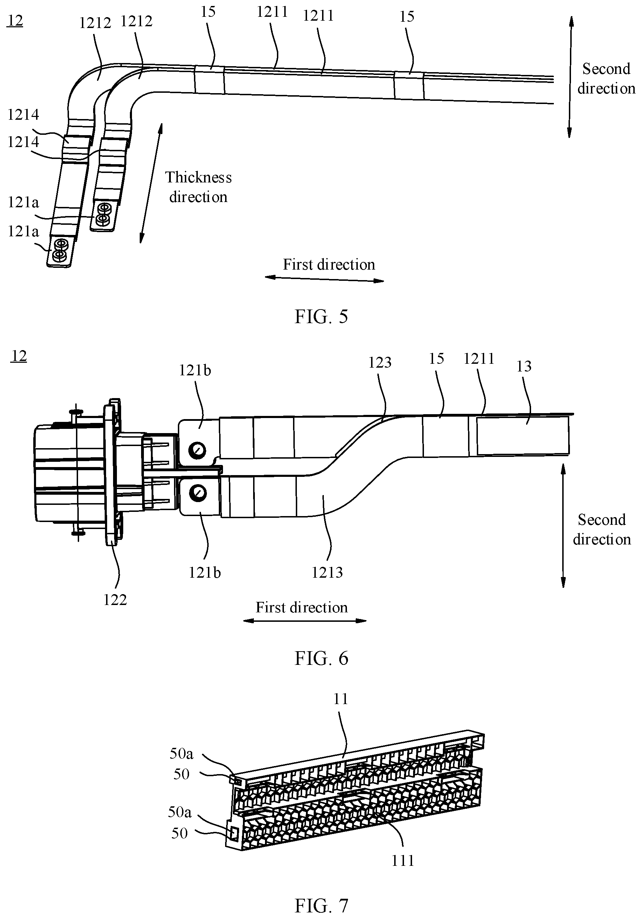

According to some embodiments of this application, as shown in FIG. 1 and FIG. 5, lengths of the extension sections 1211 of the plurality of lead-out busbars 121 gradually increases in a direction toward the bottom wall of the accommodating groove 11a such that the first bent sections 1212 of the plurality of lead-out busbars 121 are spaced apart in the first direction. Specifically, because the plurality of lead-out busbars 121 are stacked in the thickness direction and the first lead-out ends 121a of the plurality of lead-out busbars 121 all extend in the direction away from the fixing platform 11, to prevent interference in arrangement positions of the first lead-out ends 121a of the plurality of lead-out busbars 121, the lengths of the extension sections 1211 of the plurality of lead-out busbars 121 gradually increase, so that the first bent sections 1212 of the plurality of lead-out busbars 121 are spaced apart in the first direction, thereby facilitating arrangement of the first lead-out ends 121a of the plurality of lead-out busbars 121.

According to some embodiments of this application, as shown in FIG. 6, each lead-out busbar 121 further includes a second lead-out end 121b. The second lead-out end 121b is arranged at the other end of the extension section 1211 in the first direction. The second lead-out end 121b is adapted to electrically connect to a high-voltage connector 122. The second lead-out end 121b of a portion of the lead-out busbars 121 in the plurality of lead-out busbars 121 is directly connected to the other end of the extension section 1211 in the first direction. A second bent section 1213 is formed on the second lead-out end 121b of the other portion of the lead-out busbars 121 in the plurality of lead-out busbars 121. One end of the second bent section 1213 is connected to the other end of the extension section 1211 in the first direction, and the other end of the second bent section 1213 is bent toward one of the two sidewalls opposite to the accommodating groove 11a and is connected to the second lead-out end 121b, that is, the other end of the second bent section 1213 is bent toward the second direction and connected to the second lead-out end 121b.

In some embodiments, the high-voltage connector 122 is provided with two connecting plugs, and the two connecting plugs are arranged in the second direction. The first lead-out end 121a of the positive electrode lead-out busbar of the battery may be electrically connected to the positive electrode of the battery, and the second lead-out end 121b of the positive electrode lead-out busbar of the battery is electrically connected to one connecting plug of the high-voltage connector 122. Then, the first lead-out end 121a of the negative electrode lead-out busbar of the battery is electrically connected to the negative electrode of the battery, and the second lead-out end 121b of the negative electrode lead-out busbar of the battery is electrically connected to the other connecting plug of the high-voltage connector 122. In some embodiments, because the plurality of lead-out busbars 121 are stacked in the thickness direction and the two connecting plugs of the high-voltage connector 122 are arranged in the second direction, to ensure that the positive electrode lead-out busbar and the negative electrode lead-out busbar of the battery can be electrically connected to the corresponding connecting plugs, the second bent section 1213 is arranged at the extension section 1211 and the second lead-out end 121b of the positive electrode lead-out busbar of the battery, or the second bent section 1213 is arranged at the extension section 1211 and the second lead-out end 121b of the negative electrode lead-out busbar of the battery, so that one of the second lead-out ends 121b of the positive electrode lead-out busbar and the negative electrode lead-out busbar of the battery is led out in the second direction, and therefore, the second lead-out end 121b of the positive electrode lead-out busbar of the battery and the second lead-out end 121b of the negative electrode lead-out busbar of the battery are electrically connected to the high-voltage connector 122.

According to some embodiments of this application, as shown in FIG. 6, the power lead-out structure for a battery pack further includes a first insulating layer 123. The first insulating layer 123 is arranged between the extension sections 1211 of two adjacent lead-out busbars 121 to ensure that the two adjacent lead-out busbars 121 are insulated from each other, thereby preventing short circuits.

In some embodiments, the first insulating layer 123 is made of a PET material.

According to some embodiments of this application, a second insulating layer is arranged on an outer surface of each lead-out busbar 121. In some embodiments, the lead-out busbar 121 is made of a conductive material. The second insulating layer may be arranged on the outer surface of each lead-out busbar 121 to ensure an insulation effect between two adjacent lead-out busbars 121. In addition, the second insulating layer arranged on the outer surface of the lead-out busbar 121 can also ensure an insulation effect between the lead-out busbar 121 and the fixing platform 11.

Each lead-out busbar 121 may be manufactured separately. The second insulating layer arranged on each lead-out busbar 121 may be made of the same insulating material or have the same configuration, or may be made of different insulating materials or have different configurations. The second insulating layer may be configured by various technologies, including but not limited to plastic injection molding, hot-melt molding, PI coating, mica coating, spraying and dip powder coating, or the like, and an insulation design can be made by using characteristics of different insulation protections. No limitations are made herein.

According to some embodiments of this application, as shown in FIG. 6, an insulating buffer 13 is arranged between the lead-out busbar group 12 and the bottom wall of the accommodating groove 11a. It will be understood that when the second insulating layer on the lead-out busbar 121 is in direct contact with the fixing platform 11, vibration of the housing may cause friction between the second insulating layer and the fixing platform 11, thereby causing wear. Therefore, the insulating buffer 13 is arranged between the lead-out busbar 121 and the bottom wall of the accommodating groove 11a, to separate the lead-out busbar 121 from the bottom wall of the accommodating groove 11a. Furthermore, the insulating buffer 13 is designed to be insulating to prevent leakage.

In some embodiments, the insulating buffer 13 may be a buffer foam structure or other structures that can prevent the second insulating layer from directly contacting the bottom wall of the accommodating groove 11a.

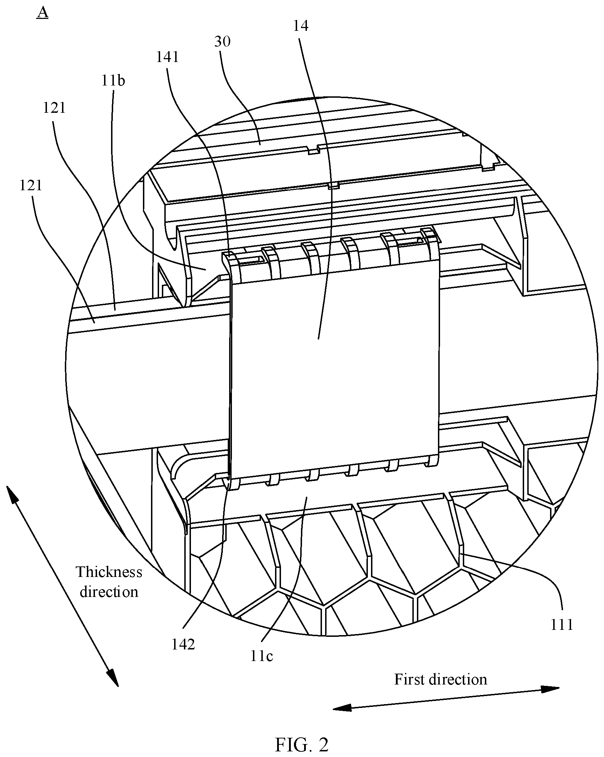

According to some embodiments of this application, as shown in FIG. 1 and FIG. 2, the power lead-out structure for a battery pack further includes an insulating fixing plate 14. A surface of the insulating fixing plate 14 that faces the fixing platform 11 is adapted to abut against a surface of the lead-out busbar group 12 that is away from the fixing platform 11. An arrangement position of the insulating fixing plate 14 corresponds to an arrangement position of the insulating buffer 13 in the thickness direction of the lead-out busbar group 12. In some embodiments, the insulating fixing plate 14 can fix the lead-out busbar group 12 into the accommodating groove 11a. In some embodiments, the buffer insulation is configured as buffer foam. An arrangement position of the insulating fixing plate 14 corresponds to an arrangement position of the insulating buffer 13 in the thickness direction of the lead-out busbar group 12, so that the insulating fixing plate 14 can apply a force to the buffer foam. Therefore, the buffer foam has a specific degree of compressibility, and buffering effect of the buffer foam is ensured.

According to some embodiments of this application, as shown in FIG. 1 to FIG. 4, a first snap-fit pin 141 and a second snap-fit pin 142 are formed on one side of the insulating fixing plate 14 in the thickness direction. The first snap-fit pin 141 and the second snap-fit pin 142 are respectively located at two ends of the insulating fixing plate 14 in the extension direction. The first snap-fit groove 11b and the second snap-fit groove 11c are respectively arranged on two sides of the accommodating groove 11a in the first direction. An arrangement position of the second snap-fit groove 11c corresponds to an arrangement position of the first snap-fit groove 11b and both the second snap-fit groove 11c and the first snap-fit groove 11b are spaced apart from the accommodating groove 11a. The first snap-fit groove 11b is adapted to accommodate the first snap-fit pin 141. The second snap-fit groove 11c is adapted to accommodate the second snap-fit pin 142. Therefore, the insulating fixing plate 14 is in snap-fit with the fixing platform 11, assembly efficiency of the insulating fixing plate 14 and the fixing platform 11 can be improved, and assembly difficulty of the insulating fixing plate 14 and the fixing platform 11 can be reduced.

According to some embodiments of this application, as shown in FIG. 1, the insulating buffer 13 and the insulating fixing plate 14 are respectively configured as a plurality of members that are spaced apart in the first direction and in one-to-one correspondence. Because the lead-out busbar 121 is relatively long in the first direction, the plurality of insulating buffers 13 are spaced apart in the first direction to ensure that the lead-out busbar 121 is spaced apart from the bottom wall of the accommodating groove 11a, and the plurality of insulating fixing plates 14 are spaced apart in the first direction to fix the lead-out busbar 121 in the extension direction of the lead-out busbar 121, which can alleviate a problem that the lead-out busbar 121 is too long and is easily deformed during transportation and mounting.

In some embodiments, the insulating fixing plate 14 is configured as a plastic snap-fit structure.

According to some embodiments of this application, an adhesive layer is arranged between two adjacent lead-out busbars 121, and the lead-out busbars 121 are bonded together across large surfaces and fed in a side-by-side configuration, which can alleviate a problem that the lead-out busbars 121 are too long and are easily deformed during transportation and mounting.

In some embodiments, as shown in FIG. 1, FIG. 5, and FIG. 6, at least a portion of an outer periphery of the lead-out busbar group 12 is wrapped with and fixed by a high-temperature adhesive tape 15, which can better alleviate the problem that the lead-out busbars 121 are too long and are easily deformed during transportation and mounting.

A battery pack 1 according to this application is briefly described below.

As shown in FIG. 1, the battery pack 1 according to this application includes: a plurality of batteries, a housing, and a power lead-out structure for a battery pack. The housing defines an accommodating cavity adapted to accommodate the plurality of batteries. The power lead-out structure is arranged in the housing and is configured as the power lead-out structure according to any one of the foregoing embodiments. In some embodiments, the housing may include structures such as a tray, a partition beam 40, or a filler, and the fixing platform 11 may be arranged in one or more of the foregoing housing structures. The battery is provided with a positive electrode and a negative electrode. The lead-out busbar 121 is adapted to electrically connect to the positive electrode or the negative electrode of the battery. The lead-out busbar 121 can be fixed to a preset position on the housing based on an internal structure design of the housing. The specific position is not limited herein. Because the battery pack 1 according to this application is provided with the power lead-out structure for a battery pack according to any one of the foregoing embodiments, the battery pack 1 has higher space utilization and structural strength.

According to some embodiments of this application, the housing includes a tray and a power distribution box 60. The tray is provided with an accommodating cavity. The power distribution box 60 is arranged on the tray and accommodated in the accommodating cavity. The power lead-out structure is arranged on the tray and electrically connected to the power distribution box 60. Specifically, the overall power lead-out structure can be fixed to a surface of the tray or embedded into the tray. One end of the power lead-out structure is electrically connected to the positive and negative electrodes of the battery in the accommodating cavity, and the other end of the power lead-out structure is electrically connected to the power distribution box 60.

According to some embodiments of this application, the tray includes a tray base plate 20 and a tray side beam 30. The tray side beam 30 is arranged on an edge of the tray base plate 20 and defines the accommodating cavity together with the tray base plate 20. The fixing platform 11 is arranged on the tray side beam 30. When the fixing platform 11 is arranged on the tray side beam 30, to improve structural strength of the fixing platform 11, a reinforcing structure 111 as shown in FIG. 2 can be arranged on a first surface 110 of the fixing platform 11. The reinforcing structure 111 in FIG. 2 is configured as a honeycomb shape. This reinforcing structure 111 includes a plurality of cavities, and a peripheral wall of each cavity is a cylindrical surface or conical surface to improve structural strength of the fixing platform 11. This design allows the fixing platform 11 to withstand greater force, thereby reducing risk of damage to the fixing platform 11 under an expansion force of the battery when the battery expands. In addition, this design allows the fixing platform 11 to withstand more impact energy, which is conducive to reducing impact damage to the battery, thereby improving safety of the battery. Furthermore, the batteries close to the tray side beam 30 are subjected to uniform force, which can improve overall consistency of the batteries.

In some embodiments, the fixing platform 11 arranged on the tray side beam 30 is configured as a plastic member.

According to some embodiments of this application, the housing further includes a partition beam 40. The partition beam 40 is arranged in the accommodating cavity and divides the accommodating cavity into a battery cavity 20b and a power distribution cavity 20a. The power distribution cavity 20a is adapted to accommodate the power distribution box 60. At least a portion of the power lead-out structure extends to the power distribution cavity 20a to electrically connect to the power distribution box 60. In some embodiments, a plurality of batteries are arranged in the battery cavity 20b, and a plurality of batteries and electrical structures (such as a power distribution box 60) are arranged in the power distribution cavity 20a. The power distribution cavity 20a is generally located on a front side of the housing in a vehicle travel direction. A fast charging connector of the housing is located on a rear side in the vehicle travel direction. In this case, the lead-out busbar group 12 of the power lead-out structure extends from the fast charging connector to the power distribution cavity 20a and be bent, so as to connect to the electrical structures in the power distribution cavity 20a.

According to some embodiments of this application, the fixing platform 11 is arranged on the partition beam 40. In this case, the lead-out busbar group 12 can be fixed on the partition beam 40 to meet wiring requirements of different battery packs 1.

According to some embodiments of this application, as shown in FIG. 7, the fixing platform 11 is adapted to abut against the battery. At least one mounting cavity is defined in the fixing platform 11. The battery pack 1 further includes a protective support 50. The protective support 50 is arranged in the at least one mounting cavity, and an exhaust channel 50a is defined in the protective support 50. The exhaust channel 50a is adapted to be in communication with an explosion-proof valve of the battery.

Specifically, the fixing platform 11 is adapted to be opposite to and abut against the battery, so that the fixing platform 11 can at least withstand an expansion force of the battery, and therefore, the fixing platform 11 can absorb expansion of the battery, reduce a compressive force exerted on the battery, and play a role in bearing and protection. Therefore, the fixing platform 11 can adaptively absorb the expansion force of the battery to improve battery safety. It will be understood that the fixing platform 11 can absorb a specific amount of impact energy. When a side of the battery pack 1 that is provided with the fixing platform 11 is subjected to an impact, the fixing platform 11 can absorb impact energy, thereby reducing deformation of the battery and protecting the battery. Optionally, the fixing platform 11 may be a non-metallic member, such as a rubber member or a plastic member.

In some embodiments, at least one mounting cavity is defined in the fixing platform 11. The mounting cavity is adapted to communicate the inside and the outside of the battery pack 1. At least one mounting cavity is provided with a protective support 50, and an exhaust channel 50a is defined in the protective support 50. The exhaust channel 50a is adapted to be in communication with an explosion-proof valve of the battery. The exhaust channel 50a can be in communication with the outside of the battery pack 1, thereby enabling the battery to exhaust high-temperature discharge substances through the explosion-proof valve when the battery experiences thermal runaway. By mounting the protective support 50 in the mounting cavity, when the battery experiences thermal runaway, the protective support 50 can separate a high-temperature gas from a cavity wall of the mounting cavity, so that the high-temperature gas is not in contact with a wall surface of the mounting cavity, thereby reducing risk that the mounting cavity is easily damaged by the high-temperature gas during thermal runaway, and being conducive to improving flexibility of material selection for the fixing platform 11. In addition, the protective support 50 has good structural strength relative to the fixing platform 11, so that when the fixing platform 11 is subjected to an expansion force of the battery, the protective support 50 undergoes minimal deformation, or virtually no deformation. The protective support 50 can provide a good support for the fixing platform 11, to improve structural stability of the exhaust channel 50a and the mounting cavity, so that when the battery expands, the exhaust channel 50a remains in communication, thereby improving exhaust smoothness and stability, reducing a risk of the exhaust channel 50a being blocked due to being flattened by battery expansion, and facilitating improvement of structural stability and bearing capacity of the fixing platform 11. As a result, the high-temperature gas generated when the battery experiences thermal runaway can be promptly discharged out of the battery pack 1 through the exhaust channel 50a. This prevents the high-temperature gas from coming into contact with other batteries to trigger thermal runaway of more batteries, slowing down a thermal propagation speed, enabling a battery management system (BMS) to have sufficient response time to promptly turn off a power supply circuit of the battery, and thereby improving safety of the battery pack 1.

It can be seen that arrangement of the protective support 50 can reduce risk of the fixing platform 11 being damaged and crushed by the expansion force of the battery, thereby improving operational reliability of the fixing platform 11. It will be understood that a mounting cavity is defined in the fixing platform 11, and the mounting cavity is provided with a protective support 50. When a plurality of mounting cavities are defined in the fixing platform 11, at least one of the plurality of mounting cavities is provided with a protective support 50. Optionally, a cross-sectional shape of the mounting cavity is not limited. For example, the cross-sectional shape of the mounting cavity may be circular, elliptical, square, or the like.

It will be understood that when there are a plurality of mounting cavities, an arrangement form of the plurality of mounting cavities is not specifically limited. No matter whether there are one or a plurality of mounting cavities, for an individual mounting cavity, the mounting cavity is not limited in position. For example, in a height direction of the fixing platform 11, the mounting cavity may be located at an end portion or a middle portion of the fixing platform 11; and in a width direction of the fixing platform 11, the mounting cavity may be located at an end portion or a middle portion of the fixing platform 11.

A vehicle according to this application is briefly described below.

A vehicle according to this application includes the battery pack 1 according to the foregoing embodiments. Because the vehicle according to this application is provided with the battery pack 1 according to the foregoing embodiment, the vehicle is safer to use.

In the description of this specification, descriptions referring to the terms "one embodiment", "some embodiments", "exemplary embodiments", "examples", "specific examples", or "some examples" mean that specific features, structures, materials, or characteristics described in connection with this embodiment or example are included in at least one embodiment or example of this application. In this specification, the schematic representations of the foregoing terms are not necessarily aimed at the same embodiment or example. Furthermore, specific features, structures, materials or characteristics described may be combined in any one or more embodiments or examples in a suitable manner.

Although the embodiments of this application have been shown and described, a person of ordinary skill in the art will understand that many changes, modifications, substitutions and variations can be made to these embodiments without departing from the principles and purposes of this application, and the scope of this application is defined by the claims and their equivalents.

## Claims

1. A power lead-out structure for a battery pack, comprising:
a fixing platform (11), the fixing platform (11) being provided with an accommodating groove (11a); and
a lead-out busbar (121), the lead-out busbar (121) being accommodated in the accommodating groove (11a), and
the lead-out busbar (121) comprising a positive electrode lead-out busbar and a negative electrode lead-out busbar and being fixed to the fixing platform (11).

2. The power lead-out structure for a battery pack according to claim 1, wherein the positive electrode lead-out busbar and the negative electrode lead-out busbar are separately accommodated in the same accommodating groove (11a), and the positive electrode lead-out busbar and the negative electrode lead-out busbar are stacked in a thickness direction.

3. The power lead-out structure for a battery pack according to claim 2, wherein at least one positive electrode lead-out busbar is provided, at least one negative electrode lead-out busbar is provided, one or a plurality of positive electrode lead-out busbars and one or a plurality of negative electrode lead-out busbars are stacked in the thickness direction and accommodated in one accommodating groove (11a).

4. The power lead-out structure for a battery pack according to claim 1, wherein a plurality of the accommodating grooves (11a) are provided, forming at least one first accommodating groove (110a) and at least one second accommodating groove (111a) that are isolated from each other, the positive electrode lead-out busbar is accommodated in the first accommodating groove (110a), and the negative electrode lead-out busbar is accommodated in the second accommodating groove (111a).

5. The power lead-out structure for a battery pack according to claim 4, wherein each first accommodating groove (110a) is provided with a plurality of positive electrode lead-out busbars stacked in the thickness direction, and each second accommodating groove (111a) is provided with a plurality of negative electrode lead-out busbars stacked in the thickness direction.

6. The power lead-out structure for a battery pack according to claim 3 or 5, wherein a plurality of lead-out busbars (121) located in the same accommodating groove (11a) are configured as a lead-out busbar group (12), and a side surface of the lead-out busbar (121) in the thickness direction is opposite to a bottom wall of the accommodating groove (11a).

7. The power lead-out structure for a battery pack according to claim 6, wherein the accommodating groove (11a) extends in a first direction; and
each lead-out busbar (121) comprises:
an extension section (1211), the extension section (1211) extending in the first direction, and a projection thereof in the thickness direction partially coinciding with a projection of the accommodating groove (11a) in the thickness direction; and
a first lead-out end (121a), the first lead-out end (121a) being located at one end of the extension section (1211) in the first direction and extending in a direction away from the fixing platform (11).

8. The power lead-out structure for a battery pack according to claim 7, wherein the fixing platform (11) has a first surface (110), and the accommodating groove (11a) is formed in the first surface (110); and
each lead-out busbar (121) further comprises:
a first bent section (1212), one end of the first bent section (1212) being connected to one end of the extension section (1211) in the first direction, and the other end of the first bent section (1212) being bent toward one of two sidewalls opposite to the accommodating groove (11a) and being connected to the first lead-out end (121a).

9. The power lead-out structure for a battery pack according to claim 8, wherein in a direction toward the bottom wall of the accommodating groove (11a), lengths of the extension sections (1211) of the plurality of lead-out busbars (121) gradually increase, such that the first bent sections (1212) of the plurality of lead-out busbars (121) are spaced apart in the first direction.

10. The power lead-out structure for a battery pack according to claim 9, wherein each lead-out busbar (121) further comprises a second lead-out end (121b), the second lead-out end (121b) is arranged at the other end of the extension section (1211) in the first direction, the second lead-out end (121b) is adapted to electrically connect to a high-voltage connector (122);
the second lead-out end (121b) of a portion of the lead-out busbars (121) is directly connected to the other end of the extension section (1211) in the first direction; and
a second bent section (1213) is formed at the second lead-out end (121b) of the other portion of the lead-out busbars (121), one end of the second bent section (1213) is connected to the other end of the extension section (1211) in the first direction, and the other end of the second bent section (1213) is bent toward one of two sidewalls opposite to the accommodating groove (11a) and is connected to the second lead-out end (121b).

11. The power lead-out structure for a battery pack according to any one of claims 7 to 10, further comprising: a first insulating layer (123), the first insulating layer (123) being arranged between the extension sections (1211) of two adjacent lead-out busbars (121).

12. The power lead-out structure for a battery pack according to any one of claims 1 to 11, wherein a second insulating layer is arranged on an outer surface of each lead-out busbar (121).

13. The power lead-out structure for a battery pack according to any one of claims 6 to 11, wherein an insulating buffer (13) is arranged between the lead-out busbar group (12) and the bottom wall of the accommodating groove (11a).

14. The power lead-out structure for a battery pack according to claim 13, further comprising:
an insulating fixing plate (14), a surface of the insulating fixing plate (14) that faces the fixing platform (11) being adapted to abut against a surface of the lead-out busbar group (12) that is away from the fixing platform (11), and an arrangement position of the insulating fixing plate (14) corresponding to an arrangement position of the insulating buffer (13) in the thickness direction of the lead-out busbar group (12).

15. The power lead-out structure for a battery pack according to claim 14, wherein a first snap-fit pin (141) and a second snap-fit pin (142) are formed on a side of the insulating fixing plate (14) in the thickness direction, and the first snap-fit pin (141) and the second snap-fit pin (142) are respectively located at two ends of the insulating fixing plate (14) in an extension direction; and
the accommodating groove (11a) is separately provided with a first snap-fit groove (11b) and a second snap-fit groove (11c) on two sides in the first direction, an arrangement position of the second snap-fit groove (11c) corresponds to an arrangement position of the first snap-fit groove (11b), both the second snap-fit groove (11c) and the first snap-fit groove (11b) are spaced apart from the accommodating groove (11a), the first snap-fit groove (11b) is adapted to accommodate the first snap-fit pin (141), and the second snap-fit groove (11c) is adapted to accommodate the second snap-fit pin (142).

16. The power lead-out structure for a battery pack according to claim 14 or 15, wherein the insulating buffer (13) and the insulating fixing plate (14) are respectively configured as a plurality of members that are spaced apart in the first direction and in one-to-one correspondence.

17. The power lead-out structure for a battery pack according to any one of claims 1 to 16, wherein an adhesive layer is arranged between two adjacent lead-out busbars (121).

18. A battery pack, comprising:
a plurality of batteries;
a housing, the housing defining an accommodating cavity adapted to accommodate the plurality of batteries; and
a power lead-out structure, the power lead-out structure being arranged in the housing and being configured as the power lead-out structure according to any one of claims 1 to 17.

19. The battery pack according to claim 18, wherein the housing comprises:
a tray, the tray being provided with an accommodating cavity; and
a power distribution box (60), the power distribution box (60) being arranged on the tray and accommodated in the accommodating cavity, wherein
the power lead-out structure is arranged on the tray and electrically connected to the power distribution box (60).

20. The battery pack according to claim 19, wherein the tray comprises:
a tray base plate (20); and
a tray side beam (30), the tray side beam (30) being arranged on an edge of the tray base plate (20) and defining the accommodating cavity together with the tray base plate (20), and the fixing platform (11) being arranged on the tray side beam (30).

21. The battery pack according to claim 19 or 20, wherein the housing further comprises:
a partition beam (40), the partition beam (40) being arranged in the accommodating cavity and dividing the accommodating cavity into a battery cavity (20b) and a power distribution cavity (20a), and the power distribution cavity (20a) being adapted to accommodate the power distribution box (60), wherein
at least a portion of the power lead-out structure extends to the power distribution cavity (20a) to electrically connect to the power distribution box (60).

22. The battery pack according to claim 21, wherein the fixing platform (11) is arranged on the partition beam (40).

23. The battery pack according to claim 22, wherein the fixing platform (11) is adapted to be opposite to and abut against the battery, and at least one mounting cavity is defined in the fixing platform (11); and
the battery pack (1) further comprises: a protective support (50), the protective support (50) being arranged in the at least one mounting cavity, an exhaust channel (50a) being defined in the protective support (50), and the exhaust channel (50a) being adapted to be in communication with an explosion-proof valve of the battery.

24. A vehicle, comprising the battery pack (1) according to any one of claims 18 to 23.
